# EUROPÄISCHE PATENTSCHRIFT

(11) **EP 3 718 446 B1**
(45) Veröffentlichungstag und Bekanntmachung des Hinweises auf die Patenterteilung: **02.11.2022**
(21) Anmeldenummer: 20162440.0
(22) Anmeldetag: 11.03.2020
(51) Int. Cl.: A47J 42/08, A47J 42/18

(54) **EINSTELLEINRICHTUNG ZUM EINSTELLEN DES MAHLGRADS EINES MAHLWERKS**
ADJUSTING DEVICE FOR ADJUSTING THE GRINDING EFFICIENCY OF A GRINDING MILL
DISPOSITIF DE RÉGLAGE PERMETTANT DE RÉGLER LE DEGRÉ DE MOUTURE D'UN BROYEUR

(30) Priorität: 02.04.2019 DE 102019204620
(43) Veröffentlichungstag der Anmeldung: 07.10.2020
(73) Patentinhaber: BSH Hausgeräte GmbH, 81739 München (DE)
(72) Erfinder: Jäger, Harald, 83349 Palling (DE); Schreiner, Thomas, 84431 Rattenkirchen (DE); Riepl, Dominik, 93339 Riedenburg (DE); Eder, Florian, 83132 Pittenhart (DE)

(56) Entgegenhaltungen:
- EP-A1- 1 466 547
- WO-A2-2004/093615

## Beschreibung

Die Erfindung betrifft eine Einstelleinrichtung zum Einstellen des Mahlgrads eines Mahlwerks sowie ein Mahlwerk mit einer solchen Einstelleinrichtung. Ferner betrifft die Erfindung einen Kaffeevollautomaten mit einem solchen Mahlwerk.

Herkömmliche Kaffeevollautomaten umfassen gewöhnlich ein Mahlwerk, mittels welchem ein Mahlgut gemahlen werden kann, aus welchem wiederum in einem Brühvorgang ein Heißgetränk, beispielsweise ein Kaffeegetränk, durch Aufbrühen zubereitet werden kann. Ein Mahlgrad des gemahlenen oder zu mahlenden Mahlguts, welcher widerspiegelt, wie fein das Mahlgut gemahlen oder zu mahlen ist, ist dabei einstellbar. Hierzu weisen bekannte Mahlwerke ein drehbares Stellelement, welches als Stellring ausgeführt sein kann, auf. Durch Drehen eines solchen Stellrings ist der Abstand zwischen zwei Mahlscheiben des Mahlwerks variierbar, womit der Mahlgrad des mit dem Mahlwerk zu mahlenden oder gemahlenen Mahlguts - fortan der Einfachheit halber als "Mahlgrad" des Mahlwerks bezeichnet, - einstellbar ist. Üblicherweise ist das Stellelement bzw. der Stellring manuell über ein angekoppeltes, also wirkverbundenes, Drehrad oder einen Schieber drehbar bzw. einstellbar.

Es existieren darüber hinaus auch Lösungen, bei welchen das Einstellen des Mahlgrads eines Mahlwerks elektrisch bzw. elektro-mechanisch realisiert ist. Bei diesen Lösungen werden Einstelleinrichtungen eingesetzt, welche in einer Wirkverbindung mit dem Stellelement bzw. dem Stellring des Mahlwerks gesetzt sind, wie z. B. aus WO 2004/093615 A2 und EP 1 466 547 A1 bekannt.

Bei einer aus dem Stand der Technik bekannten Einstelleinrichtung ist ein Elektromotor über eine Stirnradverzahnung an das als Stellring umgesetzte Stellelement des Mahlwerks gekoppelt. Der Elektromotor ist dabei als Schrittmotor realisiert, dessen Schrittweite einen Drehwinkel des Stellrings und damit den Abstand zwischen den Mahlscheiben bestimmt.

Eine andere nach dem Stand der Technik bekannte Einstelleinrichtung besteht in einem Schneckentrieb, der eine mit einem Elektromotor in Rotation versetzbare Schnecke aufweist, welche in eine Schrägverzahnung eingreift. Die Schrägverzahnung ist dabei direkt an dem als Stellring ausgeführten Stellelement angeordnet, so dass der Stellring ein Schneckenrad des Schneckentriebs bildet.

Als nachteilig bei beiden dieser bekannten Lösungen ist anzusehen, dass, um ein präzises Einstellen des Mahlgrads zu ermöglichen, enge Fertigungstoleranzen der Komponenten der Einstelleinrichtung eingehalten werden müssen. Solch hohe Anforderungen an die Fertigungstoleranzen wirken sich negativ auf die Kosten und die Funktion bekannter Einstelleinrichtungen aus. Auch die zum Antrieb bekannter Einstelleinrichtungen eingesetzten Schrittmotoren wirken sich auf Grund ihrer vergleichsweise hohen Beschaffungskosten negativ auf die Kosten solcher Einstelleinrichtungen aus. Ferner ist bei gewöhnlichen Einstelleinrichtungen nur ein vergleichsweise geringes Drehmoment vom Antrieb zum Stellelement übertragbar.

Es ist daher eine Aufgabe der vorliegenden Erfindung, für die Entwicklung von Einstelleinrichtungen zur Einstellung des Mahlgrads eines Mahlwerks - insbesondere zur Beseitigung der oben genannten Nachteile - neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist es demnach, eine Einstelleinrichtung zum Einstellen des Mahlgrads eines Mahlwerks mit einem angetriebenen oder antreibbaren Schneckentrieb auszuführen, mittels welchem ein Spindeltrieb angetrieben werden kann, wobei der Spindeltrieb in Wirkverbindung mit einem Stellelement des Mahlwerks gesetzt werden kann. Das Stellelement des Mahlwerks dient dabei zum Einstellen des Mahlgrads des Mahlwerks.

Erfindungsgemäß weist die Einstelleinrichtung zur Einstellung des Mahlgrads eines Mahlwerks einen Schneckentrieb auf, welcher angetrieben oder antreibbar ist. Die Einstelleinrichtung kann insbesondere zum Einstellen des Mahlgrads eines Mahlwerks für einen Kaffeevollautomaten eingesetzt werden. Der Schneckentrieb der Einstelleinrichtung kann außerdem selbsthemmend umgesetzt sein. Die Einstelleinrichtung umfasst ferner einen Spindeltrieb, welcher mit dem Schneckentrieb antriebsverbunden ist. Das bedeutet, dass der Schneckentrieb mit einer Antriebseinheit antreibbar oder angetrieben ist, und eine Antriebsleistung der Antriebseinheit über den Schneckentrieb auf den Spindeltrieb übertragen wird. Der Spindeltrieb ist zum Verstellen eines Stellelements des Mahlwerks mit diesem Stellelement in Wirkverbindung setzbar.

Die voranstehend vorgestellte, erfindungsgemäße Einstelleinrichtung bietet den Vorteil, dass sogar sehr große Maßtoleranzen der Komponenten der Einstelleinrichtung, insbesondere jener Komponenten, mittels die Einstelleinrichtung an das Mahlwerk gekoppelt wird, ausgeglichen werden können. Dies ermöglicht eine kostengünstigere Fertigung besagter Bauteile der Einstelleinrichtung. Außerdem ist eine modulare Bauweise der Einstelleinrichtung möglich, welche dann in der Praxis für verschiedene Mahlwerke in selbiger Auslegung eingesetzt werden kann. Ferner erlaubt es der Spindeltrieb auf vorteilhafte Weise, sehr hohe Kräfte bzw. Drehmomente zu übertragen, wodurch der Mahlgrad des Mahlwerks mittels der Einstelleinrichtung auch im Stillstand einstellbar ist. Ein solches Einstellen des Mahlgrads im Stillstand ist insbesondere deshalb vorteilhaft, da ein Bediener eines Kaffeevollautomaten mit einer solchen Einstelleinrichtung einen Einstellvorgang des Mahlgrads des Mahlwerks akustisch wahrnehmen kann, ohne dass die beim Einstellen entstehenden Einstellgeräusche durch die im Betrieb des Mahlwerks, also beim Mahlen, entstehenden Mahlgeräusche überdeckt werden. Außerdem baut ein erfindungsgemäßes Mahlwerk kleiner, nicht zuletzt da kleinere Elektromotoren als Antriebseinheit eingesetzt werden können, als dies bei herkömmlichen Lösungen der Fall ist.

Erfindungsgemäß umfasst der Schneckentrieb der Einstelleinrichtung eine angetriebene oder antreibbare Schnecke. Die Schnecke des Schneckentriebs der Einstelleinrichtung steht mit einem Schneckenrad des Schneckentriebs in Eingriff. Zur Ausbildung dieses Eingriffs kann die Schnecke über ein Schneckengewinde mit einer einen Schneckegewindegang begrenzenden Schneckenwindung verfügen, wobei auf dem Schneckenrad umlaufend eine auf das Schneckengewinde abgestimmte Verzahnung angeordnet ist, welche in das Schneckengewinde eingreift. Das Schneckenrad ist zum Antrieb des Spindeltriebs drehfest auf einer Spindel des Spindeltriebs angeordnet. Der Spindeltrieb umfasst außerdem einen Schlitten, welcher mittels des Spindeltriebs verstellbar ist. Ein solches Verstellen des Schlittens kann als lineares Verschieben vornehmbar sein. Der Schlitten des Spindeltriebs ist mit dem Stellelement des Mahlwerks zum Variieren eines Abstands zwischen zwei Mahlscheiben des Mahlwerks in Wirkverbindung setzbar. Das Stellelement kann hierbei zweckmäßig als Stellring umgesetzt sein. An den Schlitten können auch mehrere

Stellelemente bzw. Stellringe mehrerer unterschiedlicher Mahlwerke koppelbar sein. Vorteilhaft können bei einer solchen Einstelleinrichtung sehr große Toleranzen zwischen dem Mahlwerk bzw. dem Stellelement des Mahlwerks und der Einstelleinrichtung ausgeglichen werden .

Bei einer vorteilhaften Weiterbildung der Einstelleinrichtung umfasst diese einen Elektromotor, mittels welchem die Schnecke des Schneckentriebs angetrieben oder antreibbar ist. Die Schnecke ist in einem Schneckengehäuse-Innenraum eines Schneckengehäuses angeordnet. In dem Schneckengehäuse-Innenraum des Schneckengehäuses ist die Schnecke um eine Schneckenrotationsachse drehbar am Schneckengehäuse gelagert. Alternativ ist es auch möglich, dass die Schnecke lediglich mit einer Antriebswelle der Antriebseinrichtung antriebsverbunden ist bzw. an dieser ausgeformt ist, wobei die Antriebseinrichtung an dem Schneckengehäuse gelagert ist. Die Schnecke muss dann nicht zwingend in einer zusätzlichen Lagerung dem Schneckengehäuse abgestützt sein. Hierdurch kann der Schneckentrieb bzw. die Einstelleinrichtung besonders zuverlässig angetrieben werden und baut außerdem auch besonders kompakt.

Gemäß einer weiteren vorteilhaften Weiterbildung ist die Spindel des Spindeltriebs in einem Spindelgehäuse-Innenraum eines Spindelgehäuses angeordnet. Die Spindel ist bei dieser Weiterbildung in dem Spindelgehäuse-Innenraum um eine Spindelrotationsachse drehbar am Spindelgehäuse gelagert. Die Spindel kann zweckmäßig in Lagerbuchsen und/oder mittels zumindest einer Anlaufscheibe am Spindelgehäuse gelagert sein. Die Spindel ragt einenends in den Schneckengehäuse-Innenraum. Im Schneckengehäuse-Innenraum ist auf der Spindel das Schneckenrad des Schneckentriebs angeordnet und relativ zur Spindel drehfest mit der Spindel verbunden. Dies ermöglicht vorteilhaft eine möglichst kompakte Gestaltung der Einstelleinrichtung, so dass die Einstelleinrichtung einen besonders geringen Bauraumbedarf aufweist, da der Spindeltrieb eine hohe Übersetzung eines Antriebsmoments und einer Antriebsdrehzahl auf das Stellelement erlaubt. Hierdurch kann eine kleinere Antriebseinrichtung, beispielsweise ein kleinerer Elektromotor eingesetzt werden.

Zweckmäßig ist die Spindelrotationsachse senkrecht zu der Schneckenrotationsachse angeordnet. Eine solche Einstelleinrichtung ist besonders reibungsarm und damit besonders effizient betreibbar.

Bei einer weiteren bevorzugten Weiterbildung der Einstelleinrichtung ist der Schlitten des Spindeltriebs mittels einer Führung relativ zum Spindelgehäuse geführt. Mittels der Führung ist der Schlitten darüber hinaus relativ zur Spindel drehgesichert gelagert. Zweckmäßig ist der Schlitten mittels der Führung parallel zur Spindelrotationsachse geführt, wobei besonders zweckmäßig der Schlitten mittels der Führung im Spindelgehäuse-Innenraum geführt und relativ zur Spindel drehgesichert gelagert ist. Die Führung ist bevorzugt integral an einer Wandung des Spindelgehäuses ausgeformt, welche den Spindelgehäuse-Innenraum begrenzt. Alternativ kann die Führung auch durch diese Wandung ausgebildet sein. Vorteilhaft kann damit ein Einstellen des Mahlgrads eines Mahlwerks mittels der Einstelleinrichtung besonders feinstufig oder sogar stufenlos vorgenommen werden.

Zweckmäßig umfasst der Schlitten eine Durchgangsöffnung zur Aufnahme der Spindel. Diese Durchgangsöffnung weist ein Innengewinde auf, welches auf ein an der Spindel vorhandenes Spindelgewinde abgestimmt bzw. komplementär zu diesem ausgebildet ist. Alternativ kann an dem Schlitten ein Vorsprung vorhanden sein, welcher in einen Gewindegang des Spindelgewindes eingreift. Vorteilhaft ist damit eine besonders gute Kraftübertragung zwischen dem Spindeltrieb und einem mit demselben in Wirkverbindung gesetzten Stellelement gewährleistet.

Gemäß einer weiteren vorteilhaften Weiterbildung umfasst das Schneckengehäuse eine Schneckenabdeckung. Mittels der Schneckenabdeckung kann der Schneckengehäuse-Innenraum des Schneckengehäuses abgedeckt werden. Alternativ oder zusätzlich umfasst das Spindelgehäuse eine Spindelabdeckung, welche den Spindelgehäuse-Innenraum des Spindelgehäuses abdeckt. Außerdem kann ein Schlitz zwischen dem Spindelgehäuse und der Spindelabdeckung, durch welchen hindurch die Wirkverbindung von Schlitten und Stellelement ausgebildet wird, mit einem besenartigen Abdichtungselement abgedichtet werdenm. Vorteilhaft ist mittels der Schneckenabdeckung bzw. der Spindelabdeckung der jeweilige abgedeckte Schneckengehäuse-Innenraum oder Spindelgehäuse-Innenraum wirksam gegenüber einer die Einstelleinrichtung umgebenden Umgebung und gegenüber in dieser Umgebung vorhandenen Medien, wie beispielsweise Flüssigkeiten oder Staub, insbesondere Kaffeespritzern oder- pulver, schützbar. Dies wirkt sich insbesondere auch verschleißmindernd auf die in dem Schneckengehäuse-Innenraum bzw. dem Spindelgehäuse-Innenraum angeordneten Komponenten der Einstelleinrichtung aus.

Bei einer weiteren zweckmäßigen Weiterbildung umfasst die Einstelleinrichtung eine Erfassungseinrichtung. Mittels dieser Erfassungseinrichtung ist eine momentane Position bzw. eine Änderung dieser Position des Stellelements bzw. des Stellrings des Mahlwerks erfassbar. Da mittels des Stellelements bzw. des Stellrings der Abstand zwischen zwei Mahlscheiben variiert werden kann, kann mittels der Erfassungseinrichtung ein momentaner Einstellzustand des Mahlwerks und der in diesem Einstellzustand erzielbare Mahlgrad erfasst werden. Hierzu umfasst die Erfassungseinrichtung ein Potentiometer, welches zweckmäßig als Dreh-Potentiometer ausgeführt sein kann. Auch ist es möglich das Potentiometer als Linear-Potentiometer zu realisieren. Alternativ oder zusätzlich weist die Erfassungseinrichtung außerdem eine Lichtschranke und/oder einen Mikroschalter und/oder einen induktiven Sensor und/oder einen kapazitiven Sensor auf. Vorteilhaft ist damit ein Einstellen des Mahlgrads eines Mahlwerks besonders präzise und reproduzierbar möglich, da mittels der Erfassungseinrichtung ein momentaner Einstellzustand erfassbar ist, welcher mit einem vorgebbaren Solleinstellzustand abgeglichen werden kann. Ein Potentiometer zur Ausbildung der Erfassungseinrichtung bietet den Vorteil, dass bei Kenntnis der typischen Kenngrößen des Potentiometers eine Initialisierung der Erfassungsrichtung bei einer Inbetriebnahme oder einer Wiederinbetriebnahme der Einstelleinrichtung bzw. einer Kaffeemaschine mit der Einstelleinrichtung nicht erforderlich ist.

Die Erfindung betrifft außerdem ein Mahlwerk mit einer erfindungsgemäßen Einstelleinrichtung. Die voranstehend aufgezeigten Vorteile der Einstelleinrichtung übertragen sich auch auf das erfindungsgemäße Mahlwerk mit einer solchen Einstelleinrichtung. Darüber hinaus können bei einer direkten Abfrage der Position des Stellelements des Mahlwerks mittels der Erfassungseinrichtung der Einstelleinrichtung die Toleranzanforderungen an die übrigen Komponenten der Einstelleinrichtung reduziert werden, ohne eine mittels der Einstelleinrichtung erreichbare Einstellgenauigkeit des Stellelements zu verschlechtern.

Zweckmäßig ist ein Schlitten der Einstelleinrichtung des Mahlwerks zum Verstellen eines Stellelements des Mahlwerks mit diesem Stellelement in Wirkverbindung gesetzt. Das Stellelement kann zweckmäßig als Stellring ausgeführt sein. Infolge der Wirkverbindung zwischen dem Schlitten und dem Stellelement bzw. dem Stellring des Mahlwerks ist ein Abstand zwischen zwei Mahlscheiben des Mahlwerks mittels der Einstelleinrichtung des Mahlwerks einstellbar. Die Einstelleinrichtung des Mahlwerks umfasst ferner eine Erfassungseinrichtung zum Erfassen eines momentanen Einstellzustands des Mahlwerks. Mittels dieser Erfassungseinrichtung ist eine momentane Position bzw. eine Änderung dieser Position des Stellelements bzw. des Stellrings des Mahlwerks erfassbar. Hierzu ist diese Erfassungseinrichtung der Einstelleinrichtung des Mahlwerks mit dem Stellelement bzw. dem Stellring des Mahlwerks in Wirkverbindung gesetzt. Da mittels des Stellelements bzw. des Stellrings der Abstand zwischen zwei Mahlscheiben variiert werden kann, kann mittels der Erfassungseinrichtung ein momentaner Einstellzustand des Mahlwerks und der in diesem Einstellzustand erzielbare Mahlgrad erfasst werden. Vorteilhaft lässt sich damit der Mahlgrad des Mahlwerks besonders präzise überwachen. Zweckmäßig ist das Stellelement bzw. der Stellring des Mahlwerks in oder auf einem Gewinde des Mahlwerks relativ zu einer Kontereinrichtung des Mahlwerks drehbar. Zwischen der Kontereinrichtung des Mahlwerks und dem Stellelement bzw. Stellring sind zwei Mahlscheiben des Mahlwerks angeordnet, deren Abstand durch ein Ein- bzw. Ausschrauben des Stellelements bzw. Stellrings variierbar ist. Vorteilhaft ist bei einem solchen Mahlwerk mittels der Einstelleinrichtung besonders einfach und zuverlässig der Mahlgrad eines mittels des Mahlwerks gemahlenen oder zu mahlenden Mahlguts einstellbar.

Die Erfindung betrifft außerdem einen Kaffeevollautomaten mit einem erfindungsgemäßen Mahlwerk wie voranstehend erläutert. Zweckmäßig kann der Kaffeevollautomat eine Steuer-/Regelungseinrichtung zum Steuern/Regeln einer erfindungsgemäßen Einstelleinrichtung des Mahlwerks zum Einstellen des Mahlgrads des Mahlwerks aufweisen. Die voranstehend aufgezeigten Vorteile des erfindungsgemäßen Mahlwerks sowie der erfindungsgemäßen Einstelleinrichtung übertragen sich auch auf den Kaffeevollautomat mit dem Mahlwerk mit der Einstelleinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
Fig. 1 ein Beispiel einer erfindungsgemäßen Einstelleinrichtung in einem montierten Zustand an einem Beispiel eines erfindungsgemäßen Mahlwerks mit einer solchen Einstelleinrichtung in einer perspektivischen Darstellung,
Fig. 2 die Einstelleinrichtung der Fig. 1 bzw. das Mahlwerk mit der Einstelleinrichtung der Fig. 1 mit einem geöffneten Schneckengehäuse und einem geöffneten Spindelgehäuse in einer perspektivischen Darstellung,
Fig. 3 die beispielhafte Einstelleinrichtung bzw. das beispielhafte Mahl-werk mit der Einstelleinrichtung der Fig. 2 in einer weiteren perspektivischen Ansicht,
Fig. 4 das beispielhafte Mahlwerk, bei welchem außer einer Erfassungs-einrichtung einer beispielhaften Einstelleinrichtung die übrigen Komponenten der Einstelleinrichtung demontiert sind.

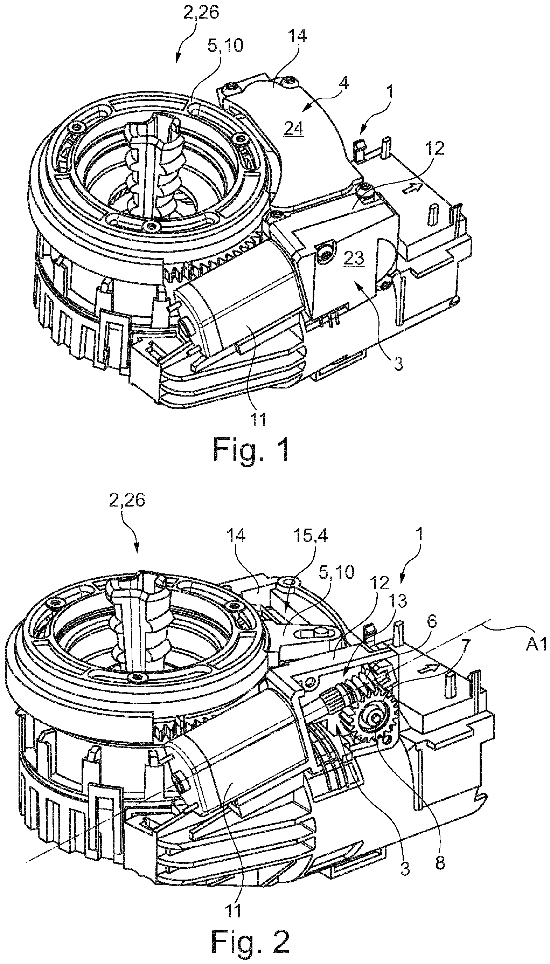

Das in den Figuren 1 bis 3 gezeigte Beispiel einer erfindungsgemäßen Einstelleinrichtung 1 dient zum Einstellen des Mahlgrads eines Mahlwerks 2. Ein solches Mahlwerk 2 ist beispielsweise in einem Kaffeevollautomaten einsetzbar. Der Mahlgrad des Mahlwerks 2 spiegelt wider, wie fein ein mittels des Mahlwerks 2 zu mahlendes oder gemahlenes Mahlgut gemahlen ist bzw. gemahlen wird. Die Einstelleinrichtung 1 umfasst einen antreibbaren Schneckentrieb 3. Ferner umfasst die Einstelleinrichtung 1 einen Spindeltrieb 4, welcher mittels des Schneckentriebs 3 angetrieben bzw. antreibbar ist. Hierzu ist der Spindeltrieb 4 mit dem Schneckentrieb 3 antriebsverbunden. Mittels des Spindeltriebs 4 ist ein Stellelement 5 des Mahlwerks 2 verstellbar. Zum Verstellen des Stellelements 5 des Mahlwerks 2 ist der Spindeltrieb 4 mit dem Stellelement 5 in Wirkverbindung setzbar.

Wie im Beispiel der Figur 2 gezeigt, kann der Schneckentrieb 3 eine antreibbare Schnecke 6 umfassen. Diese angetriebene oder antreibbare Schnecke 6 kann gemäß dem dargestellten Beispiel mit einem Schneckenrad 7 in Eingriff stehen. Hierzu kann das Schneckenrad 7 mit einer umlaufenden Verzahnung versehen sein, welche auf ein an der Schnecke 6 angeordnetes Schneckengewinde abgestimmt ist. Die Verzahnung des Schneckenrads 7 greift dann formschlüssig in das Schneckengewinde der Schnecke 6 ein. Der Schneckentrieb 3 ermöglicht es damit, ein auf die Schnecke 6 wirkendes Antriebsmoment und eine Schneckendrehzahl der Schnecke 6 zu übersetzen, wobei das Übersetzungsverhältnis durch Auslegung der Schnecke 6 und des Schneckenrads 7 vornehmbar ist. Der Schneckentrieb 3 kann selbsthemmend ausgebildet sein, was bedeutet, dass ein auf die Schnecke 6 wirkendes Moment eine Rotation der Schnecke 6 und des Schneckenrades 7 bewirkt, wobei ein an dem Schneckenrad 6 angreifendes Moment zu einem Blockieren des Schneckentriebs 3 führt. Zum Antrieb des Spindeltriebs 4 der Einstelleinrichtung 1 kann das Schneckenrad 7 mit einer Spindel 8 des Spindeltriebs 4 drehfest verbunden sein, so dass der Spindeltrieb 4 mittels des Schneckentriebs 3 antriebsverbunden ist.

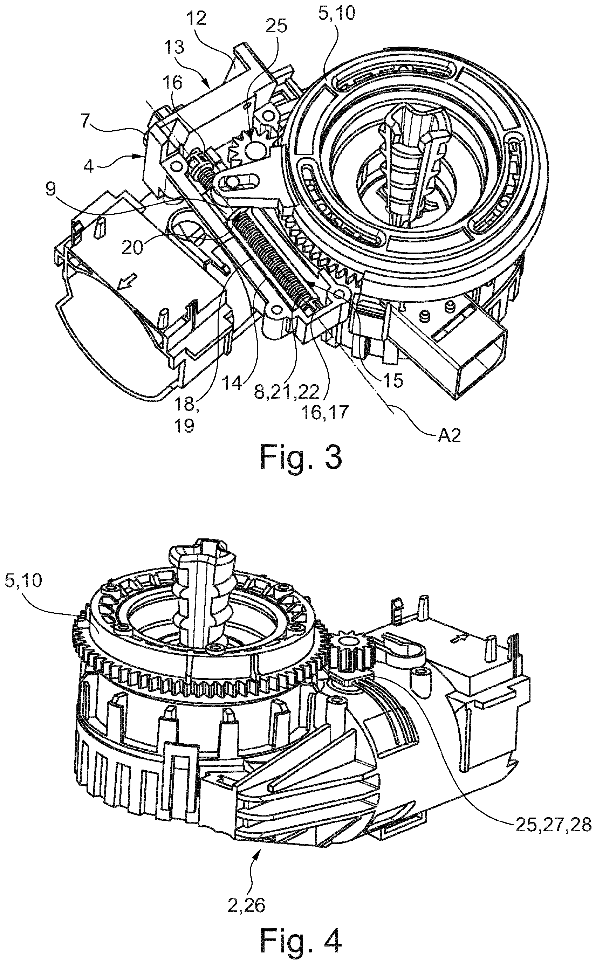

Der Spindeltrieb 4 der Einstelleinrichtung 1 kann, wie in der Figur 3 erkennbar, eine Spindel 8 und einen Schlitten 9 umfassen. Hierbei kann mittels des Spindeltriebs 8 der Schlitten 9 verstellt werden. Dieses Verstellen ist beispiels-weise in Form eines Verschiebens möglich, im dargestellten Beispiel in Form eines linearen bzw. geradlinigen Verschiebens. Zur Ausbildung der Wirkverbindung bzw. Antriebsverbindung des Spindeltriebs 4 mit dem Stellelement 5 des Mahlwerks 2 kann der Schlitten 9 des Spindeltriebs 4 mit dem Stellelement 5 verbunden bzw. verbindbar sein. Auch der Spindeltrieb 4 kann selbsthemmend ausgebildet sein. Eine an dem Schlitten 9 parallel zu einer Spindelrotationsachse A2 der Spindel 8 wirkende Kraft vermag es dann nicht, eine Rotation der Spindel 8 zu bewirken.

Zum Antrieb des angetriebenen oder antreibbaren Schneckentriebs 3 kann die Einstelleinrichtung 1, wie in den Figuren 1 und 2 zu erkennen ist, einen Elektro-motor 11 umfassen. Mittels des Elektromotors 11 kann dann die Schnecke 6 des Schneckentriebs 3 angetrieben oder antreibbar sein. Die Schnecke 6 des Schneckentriebs 3 kann in einem Schneckengehäuse-Innenraum 13 eines Schneckengehäuses 12 angeordnet sein, wie es anhand der Figur 2 nachzuvollziehen ist. Am Schneckengehäuse 12 kann die Schnecke 6 um eine Schneckenrotationsachse A1 der Schnecke 6 drehbar gelagert sein. Alternativ und in den Figuren nicht gezeigt, kann die Schnelle 6 auch lediglich mit einer Antriebswelle des Elektromotors 11 antriebsverbunden sein oder an dieser aufgeformt sein. Eine zusätzliche Lagerung der Schnecke 6 an dem Schneckengehäuse 12 ist dann nicht zwingend erforderlich.

Wie in der Figur 3 illustriert kann die Spindel 8 des Spindeltriebs 4 in einem Spindelgehäuse-Innenraum 15 eines Spindelgehäuses 14 angeordnet sein. Das Spindelgehäuse 14 kann dem in den Figuren dargestellten Beispiel entsprechend integral an dem Schneckengehäuse 12 ausgebildet sein. Die Spindel 8 kann am Spindelgehäuse 14 um die Spindelrationsachse A2 drehbar gelagert sein. Hierzu kann die Spindel in Lagerbuchsen 16 und/oder mittels einer Anlaufscheibe 17 gelagert sein.

Anhand der Figuren 2 und 3 ist nachzuvollziehen, dass die Spindel 8 an einem Ende der Spindel 8 in den Schneckengehäuse-Innenraum 13 ragen kann. An diesem in den Schneckengehäuse-Innenraum 13 ragenden Ende der Spindel 8 kann das Schneckenrad 7 relativ zur Spindel 8 drehfest mit der Spindel 8 verbunden sein, so dass der Schneckentrieb 3 antriebsverbunden mit dem Spindeltrieb 4 ist. Die Spindelrotationsachse A2 kann dabei senkrecht zu der Schneckenrotationsachse A1 verlaufen.

Wie in der Figur 3 erkennbar, kann der Schlitten 9 des Spindeltriebs 4 mittels einer Führung 18 gegenüber dem Spindelgehäuse 14 verschiebbar geführt sein. Durch die Führung 18 kann der Schlitten relativ zur Spindel 8 drehgesichert gelagert sein. Durch die Führung 18 kann der Schlitten 9 im dargestellten Beispiel parallel zur Spindelrotationsachse A2 und in dem Spindelgehäuse-Innenraum 15 verschiebbar geführt und relativ zur Spindel 8 drehgesichert gelagert sein. Die Führung 18 kann hierzu integral an einer Wandung 19 des Spindelgehäuses 14 ausgeformt sein, welche den Spindelgehäuse-Innenraum 15 begrenzt. Alternativ kann die Führung 18 durch diese Wandung 19 ausgebildet sein. Somit ist eine Rotationsbewegung der Spindel 8 mittels des Spindeltriebs 4 in eine Translationsbewegung des Schlittens 9 wandelbar. Hierzu kann der Schlitten 9 eine Durchgangsöffnung 20 zur Aufnahme der Spindel 8 umfassen. In der Durchgangsöffnung 20 kann ein Innengewinde vorhanden sein, welches auf ein an der Spindel 8 angeordnetes Spindelgewinde 28 abgestimmt ist. Alternativ kann der Schlitten 9 einen Vorsprung umfassen, welcher in einen Gewindegang 22 des Spindelgewindes 21 der Spindel 8 eingreift. Bei einer Rotationsbewegung der Spindel 8 kann somit der Schlitten 9 in eine Translationsbewegung versetzt wer-den.

Das Schneckengehäuse 12 kann wie in der Figur 1 gezeigt eine Schneckenabdeckung 23 umfassen. Mittels der Schneckenabdeckung 23 kann der Schneckengehäuse-Innenraum 13 abgedeckt sein. Analog kann das Spindelgehäuse 14 eine Spindelabdeckung 24 umfassen. Durch die Spindelabdeckung 24 kann der Spindelgehäuse-Innenraum 15 abgedeckt sein. Gegensätzlich zum Beispiel der Figur 1 sind in dem Beispiel der Figur 2 und 3 die Schneckenabdeckung 23 und die Spindelabdeckung 24 nicht vorhanden bzw. nicht montiert.

Wie in der Figur 4 verdeutlicht, kann die Einstelleinrichtung 1 eine Erfassungseinrichtung 25 umfassen. Zur besseren Erkennbarkeit der Erfassungseinrichtung 25 sind in der Figur 4 sämtliche übrigen Komponenten der Einstelleinrichtung 1 nicht vorhanden bzw. nicht montiert. Mittels dieser Erfassungseinrichtung 25 ist eine momentane Position bzw. eine Änderung dieser Position des Stellelements 5 bzw. des Stellrings 10 des Mahlwerks 2 erfassbar. Da mittels des Stellelements 5 bzw. des Stellrings 10 ein Abstand zwischen zwei Mahlscheiben des Mahlwerks 2 variiert werden kann, kann mittels der Erfassungseinrichtung 1 ein momentaner Einstellzustand 6 des Mahlwerks 2 und der in diesem Einstellzustand 6 erzielbare Mahlgrad erfasst werden. Hierzu kann die Erfassungseinrichtung wie im Beispiel der Figur 4 gezeigt ein (Dreh )Potentiometer 27, 28 umfassen. Im gezeigten Beispiel kann mittels des Dreh-Potentiometers 28 ein Drehwinkel des als Stellring 10 umgesetzten Stellelements 5 des Mahlwerks 2 erfasst werden, wobei der Dreh-winkel durch die Wirkverbindung des Spindeltriebs mit dem Stellelement 5 bzw. dem Stellring 10 direkt von dem Einstellzustand 26 der Einstelleinrichtung 1 ab-hängt. Alternativ oder zusätzlich kann die Erfassungseinrichtung 25 eine Licht-schranke und/oder einen Mikroschalter und/oder einen induktiven Sensor und/oder einen kapazitiven Sensor aufweisen, was in den Figuren jedoch nicht gezeigt ist.

In den Figuren 1 bis 4 ist darüber hinaus beispielhaft ein erfindungsgemäßes Mahlwerk 2 veranschaulicht. Dieses Mahlwerk 2 umfasst eine erfindungsgemäße Einstelleinrichtung 1 wie beispielhaft voranstehend beschrieben. Ein Schlitten 9 der Einstelleinrichtung 1 kann zum Verstellen eines Stellelements 5 des Mahlwerks 2 mit demselben Stellelement 5 in Wirkverbindung gesetzt sein. Das Stellelement 5 kann als Stellring 10 realisiert sein. Mittels des Stellelements 5 bzw. des Stellrings des Mahlwerks 2 ist ein Abstand zwischen zwei Mahlscheiben des Mahlwerks 2 einstellbar. Dieses Einstellen des Abstands zwischen den zwei Mahlscheiben des Mahlwerks 2 kann mittels der Einstelleinrichtung 1, deren Schlitten 9 mit dem Stellelement 5 bzw. dem Stellring 10 in Wirkverbindung gesetzt ist, vorgenommen werden. Das Stellelement 5 bzw. der Stellring 10 kann zweiteilig ausgeführt sein. Die beiden Teile des Stellelements 5 bzw. des Stellrings 10 können beispielsweise mittels einer Schraubverbindung lösbar miteinander verbunden werden. Eine solche Schraubverbindung kann dabei ein Langloch aufweisen, sodass die beiden Teile des Stellelements 5 bzw. des Stellrings 10 relativ zueinander in einer variablen Position befestigt werden können. Hierdurch kann eine Montage der Einstelleinrichtung 1 in jeder Position der beweglichen Teile der Einstelleinrichtung 1 bzw. des Stellelements 5 bzw. des Stellrings 10 vorgenommen werden. Die Einstelleinrichtung 1 kann eine Erfassungsrichtung 25 zum Erfassen eines momentanen Einstellzustands 26 des Mahlwerks 2 umfassen. Mittels dieser Erfassungseinrichtung 25 ist eine momentane Position bzw. eine Änderung dieser Position des Stellelements 5 bzw. des Stellrings 10 des Mahlwerks 2 erfassbar. Da mittels des Stellelements 5 bzw. des Stellrings 10 ein Abstand zwischen zwei Mahlscheiben des Mahlwerks 2 variiert werden kann, kann mittels der Erfassungseinrichtung 1 ein momentaner Einstellzustand 6 des Mahlwerks 2 und der in diesem Einstellzustand 6 erzielbare Mahlgrad erfasst werden. Die Erfassungseinrichtung 25 kann hierzu mit dem Stellelement 5 bzw. dem Stellring 10 des Mahlwerks 2 in Wirkverbindung gesetzt sein. Zum Variieren des Abstands zwischen den zwei Mahlscheiben des Mahlwerks 2 kann das Stellelement 5 bzw. der Stellring 10 des Mahlwerks 2 relativ zu einer Kontereinrichtung des Mahlwerks 2 in oder auf einem Gewinde des Mahlwerks 2 drehbar. Die Mahlscheiben des Mahlwerks 2 können dabei zwischen dem Stellelement 5 bzw. dem Stellring 10 und der Kontereinrichtung angeordnet sein. Durch ein Zu- bzw. Aufschrauben des Stellelements in oder auf dem Gewinde des Mahlwerks 2 gegenüber der Kontereinrichtung des Mahlwerks 2 kann damit der Abstand zwischen den Mahlscheiben des Mahlwerks 2 variierbar sein. Der Abstand der Mahlscheiben des Mahlwerks 2 beeinflusst maßgeblich den Mahlgrad eines mittels des Mahlwerks 2 gemahlenen oder zu mahlenden Mahlguts.

Das in den Figuren 1 bis 4 beispielhaft gezeigte und voranstehend beschriebene Mahlwerk 2 mit der beispielhaften Einstelleinrichtung 1 kann erfindungsgemäß in einem Kaffeevollautomaten mit einem solchen Mahlwerk 2 eingesetzt werden. Ein solcher Kaffeevollautomat kann ferner eine Steuer-/Regelungseinrichtung zum Steuern-/Regeln der Einstelleinrichtung 1 des Mahlwerks 2 zum Einstellen des Mahlgrads des Mahlwerks 2 aufweisen.

### Bezugszeichenliste

- A1: Schneckenrotationsachse
- A2: Spindelrotationsachse

- 1: Einstelleinrichtung
- 2: Mahlwerk
- 3: Schneckentrieb
- 4: Spindeltrieb
- 5: Stellelement
- 6: Schnecke
- 7: Schneckenrad
- 8: Spindel
- 9: Schlitten
- 10: Stellring
- 11: Elektromotor
- 12: Schneckengehäuse
- 13: Schneckengehäuse-Innenraum
- 14: Spindelgehäuse
- 15: Spindelgehäuse-Innenraum
- 16: Lagerbuchse
- 17: Anlaufscheibe
- 18: Führung
- 19: Wandung
- 20: Durchgangsöffnung
- 21: Spindelgewinde
- 22: Gewindegang
- 23: Schneckenabdeckung
- 24: Spindelabdeckung
- 25: Erfassungseinrichtung
- 26: Einstellzustand
- 27: Potentiometer
- 28: Dreh-Potentiometer

## Patentansprüche

1. Einstelleinrichtung (1) zum Einstellen des Mahlgrades eines Mahlwerks (2), insbesondere für einen Kaffeevollautomaten, mit einem angetriebenen oder antreibbaren, vorzugsweise selbsthemmenden, Schneckentrieb (3); und mit einem mit dem Schneckentrieb (3) antriebsverbundenen Spindeltrieb (4), welcher zum Verstellen eines Stellelements (5) des Mahlwerks (2) in Wirkverbindung mit dem Stellelement (5) setzbar ist, **dadurch gekennzeichnet, dass** der Schneckentrieb (3) eine angetriebenen oder antreibbare Schnecke (6) und ein mit derselben in Eingriff stehendes Schneckenrad (7), welches zum Antrieb einer Spindel (8) des Spindeltriebs (4) drehfest an der Spindel (8) angebracht ist; und dass der Spindeltrieb (4) die Spindel (8) und einen Schlitten (9) umfasst, wobei der Spindeltrieb (8) zum, insbesondere linearen, Verstellen, insbesondere Verschieben, des Schlittens (9) eingerichtet ist, und der Schlitten (9) mit dem Stellelement (5), insbesondere einem Stellring (10), des Mahlwerks (2) zum Variieren eines Abstands zwischen zwei Mahlscheiben des Mahlwerks in Wirkverbindung setzbar ist.

2. Einstelleinrichtung (1) nach Anspruch 1, **dadurch gekennzeichnet, dass** die Einstelleinrichtung (1) einen Elektromotor (11) umfasst, mittels welchem die Schnecke (6) des Schneckentriebs (3) angetrieben oder antreibbar ist, wobei die Schnecke (6) in einem Schneckengehäuse-Innenraum (13) eines Schneckengehäuses (12) angeordnet ist und um eine Schneckenrotationsachse (A1) drehbar am Schneckengehäuse (12) gelagert ist.

3. Einstelleinrichtung (1) nach Anspruch 2, **dadurch gekennzeichnet, dass** die Spindel (8) in einem Spindelgehäuse-Innenraum (15) eines, vorzugsweise integral an dem Schneckengehäuse (12) ausgebildeten, Spindelgehäuses (14) angeordnet und, insbesondere in Lagerbuchsen (16) und/oder mittels zumindest einer Anlaufscheibe (17), um eine Spindelrotationsachse (A2) drehbar am Spindelgehäuse (14) gelagert ist, wobei die Spindel (8) einenends in den Schneckengehäuse-Innenraum (13) ragt und dort mit dem Schneckenrad (7) relativ zueinander drehfest verbunden ist.

4. Einstelleinrichtung (1) nach Anspruch 3, **dadurch gekennzeichnet, dass** die Spindelrotationsachse (A2) senkrecht zu der Schneckenrotationsachse (A1) verläuft.

5. Einstelleinrichtung (1) nach Anspruch 3 oder 4, **dadurch gekennzeichnet, dass** der Schlitten (9) mittels einer Führung (18) relativ zu dem Spindelgehäuse (14), bevorzugt parallel zur Spindelrotationsachse (A2), besonders bevorzugt im Spindelgehäuse-Innenraum (15), verschiebbar geführt und relativ zur Spindel (8) drehgesichert gelagert ist, wobei die Führung (18) vorzugsweise integral an einer den Spindelgehäuse-Innenraum (15) begrenzenden Wandung (19) des Spindelgehäuses (14) ausgeformt oder durch diese Wandung (19) ausgebildet ist.

6. Einstelleinrichtung (1) nach einem der vorhergehenden Ansprüche, **dadurch gekennzeichnet, dass** der Schlitten (9) eine Durchgangsöffnung (20) zur Aufnahme der Spindel (8) umfasst, wobei die Durchgangsöffnung (20) ein auf ein Spindelgewinde (21) der Spindel (8) abgestimmtes Innengewinde aufweist, oder dass der Schlitten (9) einen Vorsprung umfasst, welcher in einen Gewindegang (22) des Spindelgewindes (21) eingreift.

7. Einstelleinrichtung (1) nach einem der Ansprüche 2 bis 6, **dadurch gekennzeichnet, dass** das Schneckengehäuse (12) eine Schneckenabdeckung (23) umfasst, welche den Schneckengehäuse-Innenraum (13) abdeckt und/oder das Spindelgehäuse (14) eine Spindelabdeckung (24) umfasst, welche den Spindelgehäuse-Innenraum (15) abdeckt.

8. Einstelleinrichtung (1) nach einem der vorhergehenden Ansprüche, **dadurch gekennzeichnet, dass** die Einstelleinrichtung (1) eine Erfassungseinrichtung (25) umfasst, mittels welcher ein durch die Position des Stellelements (5) festlegbarer momentaner Einstellzustand (26) des Mahlgrades erfassbar ist indem die Erfassungseinrichtung (25) mit dem Stellelement (5) in Wirkverbindung setzbar ist, wobei die Erfassungseinrichtung (25) ein Potentiometer (27), insbesondere ein Drehpotentiometer (28), und/oder eine Lichtschranke und/oder einen Mikroschalter und/oder einen induktiven Sensor und/oder einen kapazitiven Sensor aufweist.

9. Mahlwerk (2) mit einer Einstelleinrichtung (1) nach einem der vorhergehenden Ansprüche.

10. Mahlwerk (2) nach Anspruch 9, **dadurch gekennzeichnet, dass** ein Schlitten (9) der Einstelleinrichtung (1) zum Verstellen eines Stellelements (5), insbesondere Stellrings (10), des Mahlwerks (2) mit demselben Stellelement (5), insbesondere Stellring (10), in Wirkverbindung gesetzt ist, sodass ein Abstand zwischen zwei Mahlscheiben des Mahlwerks (2) mittels der Einstelleinrichtung (1) einstellbar ist; und/oder dass die Erfassungseinrichtung (25) der Einstelleinrichtung (1) zum Erfassen eines momentanen Einstellzustands (26) des Mahlwerks (2) mit dem Stellelement (5), insbesondere Stellring (10), des Mahlwerks (2) in Wirkverbindung gesetzt ist.

11. Mahlwerk (2) nach Anspruch 9 oder 10, **dadurch gekennzeichnet, dass** das Stellelement (5), insbesondere der Stellring (10), des Mahlwerks (2) in o-der auf einem Gewinde des Mahlwerks (2) relativ zu einer Kontereinrichtung des Mahlwerks (2) drehbar ist, wodurch ein Abstand zwischen zwei zwischen dem Stellelement (5), insbesondere Stellring (10), und einer Kontereinrichtung angeordneten Mahlscheiben des Mahlwerks (2) variierbar ist.

12. Kaffeevollautomat mit einem Mahlwerk (2) nach einem der Ansprüche 9 bis 11 und vorzugsweise mit einer Steuer-/Regelungseinrichtung zum Steuern/Regeln einer Einstelleinrichtung (1) des Mahlwerks (2) zum Einstellen des Mahlgrades des Mahlwerks (2).

## Claims

1. Adjusting device (1) for adjusting the grinding efficiency of a grinding mill (2), in particular for a fully automatic coffee machine, having a driven or driveable, preferably self-locking, worm drive (3), and having a spindle drive (4) which is drive-connected to the worm drive (3) and which can be actively connected to the control element (5) in order to displace a control element (5) of the grinding mill (2), **characterised in that** the worm drive (3) comprises a driven or driveable worm (6) and a worm gear (7) which engages with the same and which is attached in a torque-proof manner to the spindle (8) in order to drive a spindle (8) of the spindle drive (4) and that the spindle drive (4) comprises the spindle (8) and a carriage (9), wherein the spindle drive (8) is designed to adjust, in particular displace, the carriage (9) in particular in a linear manner, and the carriage (9) can be actively connected to the control element (5), in particular a control ring (10), of the grinding mill (2), in order to vary a distance between two grinding discs of the grinding mill.

2. Adjusting device (1) according to claim 1, **characterised in that** the adjusting device (1) comprises an electric motor (11), by means of which the worm (6) of the worm drive (3) is driven or can be driven, wherein the worm (6) is arranged in a worm housing interior (13) of a worm housing (12) and is mounted on the worm housing (12) so that it can rotate about a worm axis of rotation (A1).

3. Adjusting device (1) according to claim 2, **characterised in that** the spindle (8) is arranged in a spindle housing interior (15) of a spindle housing (14) preferably embodied integrally on the worm housing (12), and in particular in bearing bushes (16) and/or by means of at least one starting disc (17), is mounted on the spindle housing (14) so that it can rotate about a spindle axis of rotation (A2), wherein at one end the spindle (8) projects into the worm housing interior (13) and is connected there relative to one another in a torque-proof manner with the worm gear (7).

4. Adjusting device (1) according to claim 3, **characterised in that** the spindle axis of rotation (A2) runs at right angles to the worm axis of rotation (A1).

5. Adjusting device (1) according to claim 3 or 4, **characterised in that** the carriage (9) is guided in a displaceable manner by means of a guide (18) relative to the spindle housing (14), preferably parallel to the spindle axis of rotation (A2), particularly preferably in the spindle housing interior (15), and is mounted in a non-swivelling state relative to the spindle (8), wherein the guide (18) is preferably moulded integrally on a wall (19) of the spindle housing (14) bounding the spindle housing interior (15) or is embodied by this wall (19).

6. Adjusting device (1) according to one of the preceding claims, **characterised in that** the carriage (9) comprises a through opening (20) for receiving the spindle (8), wherein the through opening (20) has an inner thread matched to a spindle thread (21) of the spindle (8) or that the carriage (9) comprises a projection which engages into a thread (22) of the spindle thread (21).

7. Adjusting device (1) according to one of claims 2 to 6, **characterised in that** the worm housing (12) comprises a worm cover (23) which covers the worm housing interior (13) and/or the spindle housing (14) comprises a spindle cover (24) which covers the spindle housing interior (15).

8. Adjusting device (1) according to one of the preceding claims, **characterised in that** the adjusting device (1) comprises a detection device (25) by means of which a current adjusting state (26) of the milling efficiency which is definable by the position of the control element (50) can be detected by the detection device (25) being able to be actively connected to the control element (5), wherein the detection device (25) has a potentiometer (27), in particular a rotary potentiometer (28), and/or a light barrier and/or a microswitch and/or an inductive sensor and/or a capacitive sensor.

9. Grinding mill (2) with an adjusting device (1) according to one of the preceding claims,

10. Grinding mill (2) according to claim 9, **characterised in that** in order to adjust a control element (5), in particular control ring (10), of the grinding mill (2) a carriage (9) of the adjusting device (1) is actively connected with the same control element (5), in particular control ring (10), so that a distance between the two grinding discs of the grinding mill (2) can be adjusted by means of the adjusting device (1) and/or that the detection device (25) of the adjusting device (1) is actively connected with the control element (5), in particular control ring (10), of the grinding mill (2) in order to detect a current adjusting state (26) of the grinding mill (2).

11. Grinding mill (2) according to claim 9 or 10, **characterised in that** the adjusting element (5), in particular the control ring (10), of the grinding mill (2) can be rotated in or on a thread of the grinding mill (2) relative to a counter device of the grinding mill (2), as a result of which a distance between two grinding discs of the grinding mill (2) arranged between the control element (5), in particular control ring (10), and a counter device, can be varied.

12. Fully automatic coffee maker with a grinding mill (2) according to one of claims 9 to 11 and preferably with a control/regulation device for controlling/regulating an adjusting device (1) of the grinding mill (2) in order to adjust the grinding efficiency of the grinding mill (2).

## Revendications

1. Dispositif de réglage (1) permettant de régler le degré de mouture d'un moulin (2), en particulier pour une machine à café automatique, avec un entraînement à vis sans fin (3) entraîné ou pouvant être entraîné, de préférence autobloquant ; et avec un entraînement à broche (4) relié à l'entraînement à vis sans fin (3) qui, pour le réglage d'un élément de réglage (5) du moulin 52), peut être mis en liaison active avec l'élément de réglage (5), **caractérisé en ce que** l'entraînement à vis sans fin (3) comprend une vis sans fin (6) entraînée ou pouvant être entraînée et une roue à vis sans fin (7) en prise avec celle-ci, qui est montée fixe en rotation sur la vis sans fin (8) pour l'entraînement d'une broche (8) de l'entraînement à broche (4), et **en ce que** l'entraînement à broche (4) comprend la broche (8) et un coulisseau (9), dans lequel l'entraînement à broche (8) est conçu pour un réglage, en particulier linéaire, en particulier un déplacement du coulisseau (9), et le coulisseau (9) peut être couplé avec l'élément de réglage (5) en particulier une bague de réglage (10) du moulin (2) afin de faire varier la liaison active entre deux disques de mouture du moulin.

2. Dispositif de réglage (1) selon la revendication 1, **caractérisé en ce que** le dispositif de réglage (1) comprend un moteur électrique (11) au moyen duquel la vis sans fin (6) de l'entraînement à vis sans fin (3) est entraînée ou peut être entraînée, dans lequel la vis sans fin (6) est agencée dans un espace intérieur de boîtier de vis sans fin (13) d'un boîtier de vis sans fin (12) et est montée sur le boîtier de vis sans fin (12) de manière à pouvoir tourner autour d'un axe de rotation de vis sans fin (A1).

3. Dispositif de réglage (1) selon la revendication 2, **caractérisé en ce que** la broche (8) est agencée dans un espace intérieur de boîtier de broche (15) d'un boîtier de broche (14) réalisé de préférence d'un seul tenant avec le boîtier de vis sans fin (12) et est montée sur le boîtier de broche (14), en particulier dans des coussinets de palier (16) et/ou au moyen d'au moins un disque de butée (17), de manière à pouvoir tourner autour d'un axe de rotation de broche (A2), dans lequel la broche (8) fait saillie à une extrémité dans l'espace intérieur de boîtier de vis sans fin (13) et est reliée de manière fixe en rotation mutuellement avec la roue de vis sans fin (7).

4. Dispositif de réglage (1) selon la revendication 3, **caractérisé en ce que** l'axe de rotation de broche (A2) s'étend de manière perpendiculaire à l'axe de rotation de vis sans fin (A1).

5. Dispositif de réglage (1) selon la revendication 3 ou 4, **caractérisé en ce que** le coulisseau (9) est guidé de manière coulissante au moyen d'un guide (18) par rapport au boîtier de broche (14), de préférence de manière parallèle à l'axe de rotation de broche (A2), de manière particulièrement préférée dans l'espace intérieur de boîtier de broche (15), et est monté de manière sécurisée en rotation par rapport à la broche (8), dans lequel le guide (18) est de préférence formé d'un seul tenant sur une paroi (19) du boîtier de broche (14) délimitant l'espace intérieur de boîtier de broche (15) ou est formé par cette paroi (19).

6. Dispositif de réglage (1) selon l'une quelconque des revendications précédentes, **caractérisé en ce que** le coulisseau (9) comprend une ouverture traversante (20) permettant de recevoir la broche (8), dans lequel l'ouverture traversante (20) présente un filetage intérieur adapté à un filetage de broche (21) de la broche (8), ou **en ce que** le coulisseau (9) comprend une saillie qui vient en prise dans un filet (22) du filetage de broche (21).

7. Dispositif de réglage (1) selon l'une quelconque des revendications 2 à 6, **caractérisé en ce que** le boîtier de vis sans fin (12) comprend un couvercle de vis sans fin (23) qui recouvre l'espace intérieur de boîtier de vis sans fin (13) et/ou le boîtier de broche (14) comprend un couvercle de broche (24) qui recouvre l'espace intérieur de boîtier de broche (15).

8. Dispositif de réglage (1) selon l'une quelconque des revendications précédentes, **caractérisé en ce que** le dispositif de réglage (1) comprend un dispositif de détection (25), au moyen duquel un état de réglage momentané (26) du degré de mouture, qui peut être déterminé par la position de l'élément de réglage (5), peut être détecté, le dispositif de détection (25) pouvant être mis en liaison active avec l'élément de réglage (5), dans lequel le dispositif de détection (25) présente un potentiomètre (27), en particulier un potentiomètre rotatif (28), et/ou une barrière photoélectrique et/ou un microrupteur et/ou un capteur inductif et/ou un capteur capacitif.

9. Moulin (2) avec un dispositif de réglage (1) selon l'une quelconque des revendications précédentes.

10. Moulin (2) selon la revendication 9, **caractérisé en ce qu'**un coulisseau (9) du dispositif de réglage (1) servant à régler un élément de réglage (5), en particulier une bague de réglage (10), du moulin (2) est mis en liaison active avec le même élément de réglage (5), en particulier la bague de réglage (10), de sorte qu'une distance entre deux disques de mouture du moulin (2) peut être réglée au moyen du dispositif de réglage (1) ; et/ou **en ce que** le dispositif de détection (25) du dispositif de réglage (1) servant à détecter un état de réglage momentané (26) du moulin (2) est mis en liaison active avec l'élément de réglage (5), en particulier la bague de réglage (10) du moulin (2).

11. Moulin (2) selon la revendication 9 ou 10, **caractérisé en ce que** l'élément de réglage (5), en particulier la bague de réglage (10), du moulin (2) peut tourner dans ou sur un filetage du moulin (2) par rapport à un dispositif antagoniste du moulin (2), de sorte qu'une distance entre deux disques de mouture du moulin (2) agencés entre l'élément de réglage (5), en particulier la bague de réglage (10), et un dispositif antagoniste peut être modifiée.

12. Machine à café entièrement automatique avec un moulin (2) selon l'une quelconque des revendications 9 à 11 et de préférence avec un dispositif de commande/régulation permettant de commander/réguler un dispositif de réglage (1) du moulin (2) afin de régler le degré de mouture du moulin (2).
